**Europäisches Patentamt**

**European Patent Office**

**Office européen des brevets**

(11) Veröffentlichungsnummer: **0 106 933**
**B1**

(12) **EUROPÄISCHE PATENTSCHRIFT**

(45) Veröffentlichungstag der Patentschrift:
**29.10.86**

(51) Int. Cl.⁴: **B 01 D 13/00,** B 01 D 25/12

(21) Anmeldenummer: **82850209.6**

(22) Anmeldetag: **22.10.82**

(54) **Verfahren beim Schliessen, Unterdrucksetzen und Öffnen von Pressen für Membranfilter sowie Vorrichtung zur Ausübung des Verfahrens.**

(43) Veröffentlichungstag der Anmeldung:
**02.05.84 Patentblatt 84/18**

(45) Bekanntmachung des Hinweises auf die Patenterteilung:
**29.10.86 Patentblatt 86/44**

(84) Benannte Vertragsstaaten:
**DE FR GB NL**

(56) Entgegenhaltungen:
**DE - A - 2 421 781**
**FR - A - 2 021 564**
**FR - A - 2 334 628**
**GB - A - 1 447 174**
**US - A - 1 977 480**
**US - A - 4 340 475**

(73) Patentinhaber: **ALFA-LAVAL AB, Box 500,**
**S-147 00 Tumba (SE)**

(72) Erfinder: **Olenfalk, Lars, Planetvägen 3, S-175 60 Järfälla**
**(SE)**

(74) Vertreter: **Stürmer, Gerhard et al, AWAPATENT AB**
**Box 7402, S-103 91 Stockholm (SE)**

## Beschreibung

Die Erfindung bezieht sich auf eine Filterpresse nach dem Oberbegriff des Patentanspruches 1. Eine solche ist aus der DE-A-2 421 781 bekannt. Allerdings wird bei diesem vorbekannten Plattenfilter ein endloses Filterband zwischen den horizontal angeordneten Platten hindurchgeführt.

Durch die DE-B 2 802 780 ist eine Vorrichtung für umgekehrte Osmose und Ultrafiltration vorbekannt mit zwischen zwei Endplatten eingespannten, abwechselnd auf einander gestapelten tellerartigen Trägerplatten und Wasserleitplatten und zwischen Trägerplatten und Leitplatten liegenden, mit einer Filterschicht hinterlegten ringförmigen Membranen, welche in radialer Richtung membranseitig vom Rohwasser überströmt werden und filterseitig das Permeat ableiten. Durch die in dieser Schrift vorgeschlagenen konstruktiven Massnahmen erreicht man eine Verbesserung der beispielsweise durch die US-A 3 847 818 vorbekannten Vorrichtungen zum Entsalzen und Reinigen von Wasser, insbesondere was den Austausch von Membranen, das Vermeiden von Schäden an den Membranen sowie verbesserte Wirtschaftlichkeit durch Wiederverwendung von Membranen und relativ niedrige Herstellkosten mit einfacher Ausführung betrifft.

Der praktische Einsatz dieser Vorrichtung hat indessen gezeigt, dass eine Reihe von Problemen immer noch ungelöst sind. Der Austausch von Membranen wurde zwar vereinfacht, ist aber trotzdem immer noch kompliziert. Wenn beispielsweise im stehenden Filterstapel eine Membrane beschädigt wurde, müssen sämtliche oberhalb der aktuellen Filtermembrane liegenden Pressplatten, d.h. Trägerplatten und Leitplatten einschliesslich eingelegter Filterschicht und ringförmiger Membrane entfernt werden, nachdem das den Stapel oben begrenzende schwere Joch abgehoben wurde. Insbesondere letzteres bedeutet ziemlich schwere Hebearbeit und zeitraubende Arbeit mit Lösen und Abschrauben von Spindelmuttern. Weiterhin fordert die Aufstellung mehrerer Presseneinheiten ziemlich viel Platz, und die Rohranschlüsse werden kompliziert. Jede Säule muss ausserdem für sich genau senkrecht ausgerichtet werden, wozu in der Regel drei Füsse an jeder Presse verwendet werden, wovon zwei Füsse verstellbar sind.

Die FR-A-2 021 564 erwähnt eine bekannte Vorrichtung, die zum Schliessen einer Membranfilterpresse Verwendung findet. Die Verspannvorrichtung ist «lose», also eine separate Vorrichtung. Nachdem ein Stirnflansch der Presse durch eine Schraubenmutter fixiert ist, wird auf der anderen Seite diese separate Verspannvorrichtung, bestehend aus Ringkolben 52, ringförmigem Zylinder 53 und Druckring 55, zwischen Stirnflansch 7 der Presse und Widerlager 50 eingesetzt. Die Verspannvorrichtung arbeitet hydraulisch, Mutter 3 wird auf dem Spannbolzen 1 angezogen, danach die Vorrichtung entfernt.

Auch ist es aus der GB-A-1 447 174 (siehe Figur 17 und Seite 9, Zeilen 50–113) bekannt, zum Zusammenhalten einer Membranplattenzelle ein Luftkissen zu verwenden.

Die Erfindung hat zur Aufgabe, die Handhabung derartiger Pressen für Membranenfilter zu erleichtern und sie konstruktiv einfacher und weniger aufwendig auszuführen. Weiterhin soll das Öffnen und Schliessen der Presse vereinfacht werden.

Die Erfindung löst diese Aufgabe bei einer Filterpresse mit festem oberem und beweglichem unterem Joch sowie dieselben verbindenden vertikalen Säulen, wobei gegenüber der dem festem Joch abgewandten Seite des beweglichen Joches mit einem Zwischenraum ein mit den Säulen fest verbundenes Widerlager vorgesehen und im Zwischenraum eine Hebevorrichtung ansetzbar ist, dadurch, dass auf dem zwischen dem beweglichen und festen Joch liegenden, Filtermembranstapel mit den Pressplatten aufnehmenden Teil der Säulen jeweils eine Blockiervorrichtung durch Klemmwirkung o.dgl. festsetzbar ist, sowie dass jede Blockiervorrichtung einen Absatz, Vorsprung o.dgl. aufweist, der unter einer wahlfreien Pressplatte placierbar ist und diese an den Säulen festhält, wenn das bewegliche untere Joch abgesenkt wird.

Um den Austausch einer bestimmten, z.B. beschädigten Membrane im Membranenstapel und damit die Handhabung der Presse zu erleichtern, werden sämtliche oberhalb der aktuellen Membrane liegenden Pressplatten nach Unterdrucksetzung mit Hilfe der Hebevorrichtung durch eine geeignete Blockiervorrichtung in der eingenommenen Lage festgehalten. Anschliessend wird die Hebevorrichtung wieder abgesenkt, wobei nur die Pressplatte mit der beschädigten Membrane sowie die darunter liegenden Pressplatten abgesenkt werden, wodurch die beschädigte Membrane zum seitlichen Herausnehmen zugänglich wird und leicht gegen eine unbeschädigte Membrane austauschbar ist, wonach man die Presse wieder schliesst, unterdrucksetzt und verriegelt.

Nach einer vorteilhaften Ausführungsform der Vorrichtung ist jede Säule im Bereich unter dem beweglichen Joch mit einem Gewinde versehen, auf dem wenigstens eine Spindelmutter sitzt. Eine Exzenterriegelvorrichtung kann an einer oder mehreren Säulen zur Verriegelung des beweglichen Joches in eingenommener Stellung vorgesehen sein.

Eine weitere vorteilhafte Ausführungsform besteht erfindungsgemäss darin, dass aus dem zwischen dem beweglichen Joch, Widerlager und den Säulen gebildeten Zwischenraum die Hebevorrichtung herausnehmbar ist.

Zweckmässigerweise hat eine Presseneinheit nur zwei Säulen, wodurch ein Herausnehmen nicht nur von Membranen sondern auch ganzer Pressenplatten zur Seite ermöglicht wird und es somit unnötig wird, das obere feste Joch zu demontieren. Auch müssen nicht sämtliche oberhalb der aktuellen Membranenfilterplatte liegenden Platten einzeln nach oben abgehoben und ausserhalb der Presse abgelegt werden.

Da eine Presseneinheit nur eine begrenzte Filtrierfläche aufweist, z.B. etwa 8 m², wogegen oft mehrere 100 m² erforderlich sind, kann es zweckdienlich sein, dass bei der Aufstellung mehrerer derartiger Presseneinheiten deren vertikale Säulen untereinander parallel an einen Gerüstträger oder Gerüstträgermodul montiert werden, sowie dass der gesamte Gerüstträger bzw. der Gerüstträgermodul oder auch mehrere zusammengesetzte Gerüstträgermoduln in Horizontalebene als eine einzige Einheit einnivellierbar sind. Dies vereinfacht das Ausrichten der Pressen ganz entscheidend, die völlig senkrecht stehen müssen, damit die einzelnen Scheibenfilter 100% waagrecht stehen und die Membranen gleichmässig belastet werden. Weiterhin erleichtert dies die Vorfertigung von Rohrverbindungen und das Verlegen von Rohrleitungen zur Zufuhr und Ableitung von Flüssigkeit, wodurch Zeit gespart wird und aufgrund von entfallenen Einstellvorrichtungen für jede einzelne Presseneinheit auch die Investition geringer und die Konstruktion einfacher ausfällt.

Die Erfindung sei nun näher anhand eines auf beiliegenden Zeichnungen wiedergegebenen Ausführungsbeispiels beschrieben. Dabei zeigen

Fig. 1 eine schematisch dargestellte einzelne Presseneinheit,

Fig. 2 eine an einer der Säulen der Presse fixierbare Blockiervorrichtung und

Fig. 3 eine schematische Wiedergabe mehrerer gemeinsam aufgestellter Presseneinheiten.

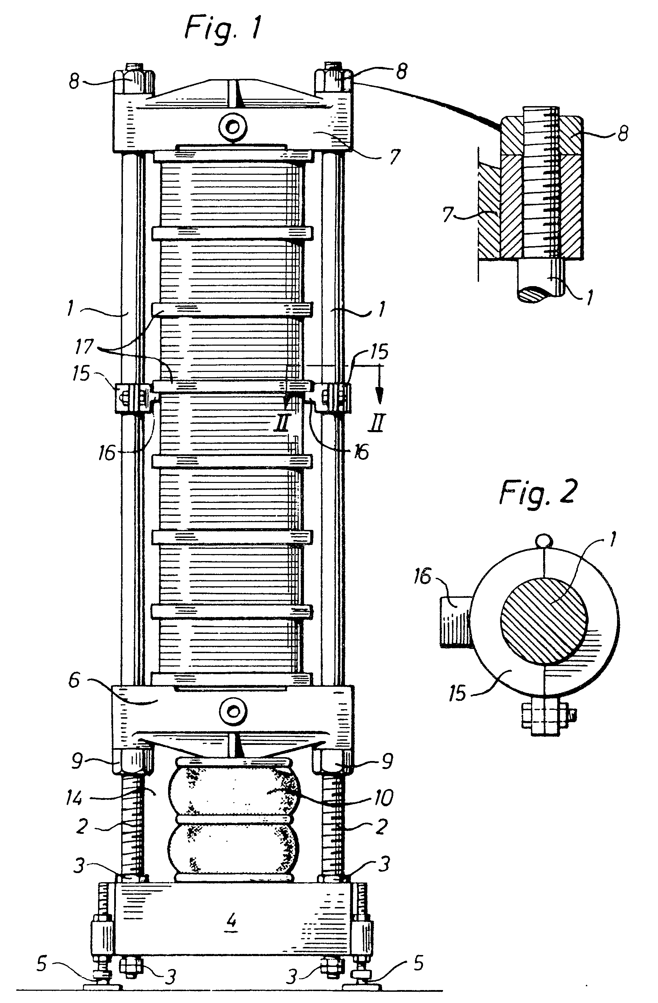

Die in Fig. 1 wiedergegebene Presseneinheit besteht auf an sich bekannte Weise aus zwei senkrechten Pressensäulen 1, deren unterer Teil 2 jeweils mit einem Gewinde versehen ist, und die durch Säulenmuttern 3 an einem Gerüstträgermodul bzw. Widerlager 4 mit stellbaren Füssen 5 befestigt sind.

Auf dien Pressensäulen 1 sitzt ein unteres, bewegliches Joch 6, und an den freien oberen Enden derselben ein festes oberes Joch 7, wobei letzteres mit Hilfe von Säulenmuttern 8 jeweils am oberen Ende der Säulen 1 festgehalten wird (siehe Detailwiedergabe rechts oben in Fig. 1). Das bewegliche Joch 6 kann von unten mit Hilfe von Spindelmuttern 9 festgehalten werden, die in Eingriff mit dem Gewinde am unteren gewindeversehenen Teil 2 der Säulen 1 stehen.

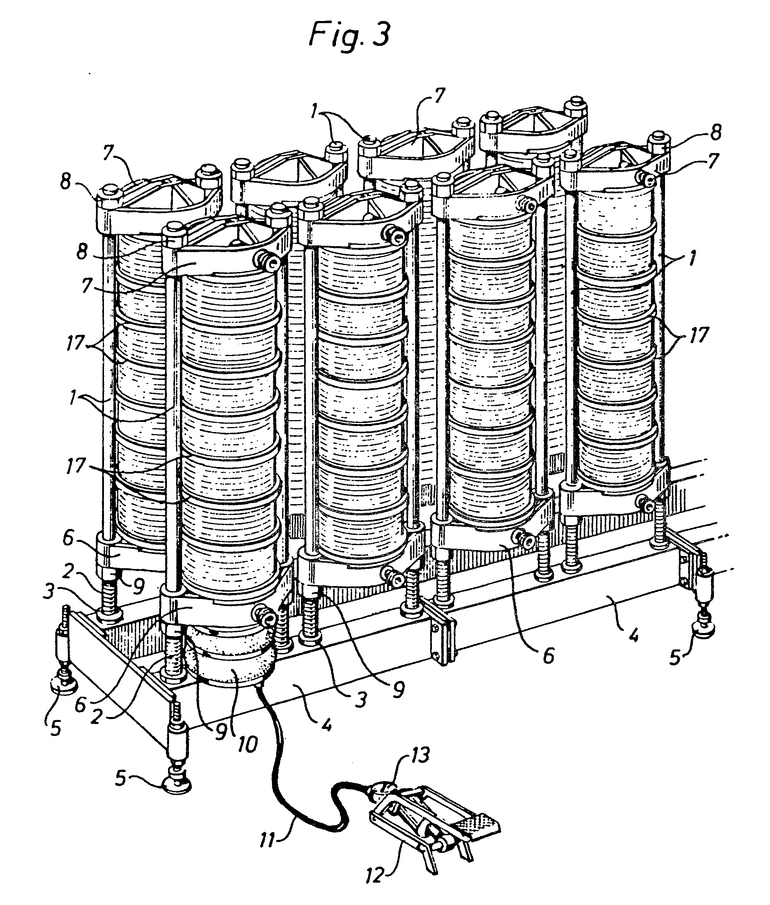

Zwischen dem beweglichen Joch 6 und dem Gerüstträger bzw. Widerlager 4 ist ein Luftbalg 10 einlegbar, der durch eine Leitung 11 an eine Druckluftquelle 12 mit Öffnungs- und Schliessorganen 13 versehen ist. Bei der in Fig. 3 dargestellten Ausführungsform besteht die Druckluftquelle aus einer Fusspumpe, kann aber durch jede zweckdienliche andere Druckluftquelle ersetzt werden. Der Druckluftbalg kann zweckmässigerweise aus einem armierten Gummibalg mit hauptsächlich unveränderlichem Durchmesser aber veränderlicher Höhe bestehen, wobei letztere mit Druckluft regelbar ist.

Weiterhin sitzt bei der Ausführung nach Fig. 1 auf dem zwischen dem beweglichen und dem festen Joch liegenden Teil der Säulen 1 eine durch Klemmwirkung festhaltbare Auflagevorrichtung bzw. Blockiervorrichtung 15 mit einem nach innen zum Filterplattenstapel hin gerichteten Vorsprung 16. Fig. 2 zeigt in einem Horizontalschnitt eine denkbare Ausführungsform einer derartigen Auflagevorrichtung 15. Der Vorsprung 16 kann unter einer wahlfreien Pressplatte bzw. einer einen Pressplattensatz unten begrenzenden Platte 17 angebracht werden und diese an der Säule festhalten, wenn das bewegliche Joch 6 abgesenkt wird.

Wie aus Fig. 3 hervorgeht, können mehrere Presseneinheiten nebeneinander mit geringem Platzbedarf aufgestellt werden, wobei deren Säulen 1 zueinander parallel auf einem Gerüstträgermodul 4 bzw. einem aus mehreren Gerüstträgermoduln zusammengesetzten Gerüstträger montiert sind. Man braucht dadurch nicht mehr jede einzelne Presseneinheit für sich ausrichten, sondern kann mit Hilfe der Stellfüsse 5 die jeweiligen Moduleinheiten mit einer Presseneinheit, einzelne Moduleinheiten mit zwei Presseneinheiten oder mehrere verschraubte Trägermoduleinheiten auf an sich bekannte aber hierdurch zeiteinsparende und rationelle Weise ausrichten.

Anhand von Fig. 1 sei nun die Funktion der erfindungsgemäss vorgeschlagenen Vorrichtung beschrieben, und zwar ausgehend davon, dass nur das bewegliche untere Joch 6 und das feste obere Joch 7 auf den Pressensäulen sitzen. In dieser Lage können die Pressenplatten bzw. Sätze von beispielsweise jeweils zehn Pressenplatten aufeinander auf das bewegliche untere Joch 6 gestapelt werden, bis der Zwischenraum zwischen den Jochen ausgefüllt ist. Danach wird im Zwischenraum 14 zwischen dem beweglichen unteren Joch 6 auf dem Gerüstträger 4 eine Hebevorrichtung angesetzt, hier ein Luftbalg 10, der an Druckluft angeschlossen wird, was die Länge des Luftbalges 10 erhöht und dadurch das bewegliche Joch 6 nach oben presst, wonach das bewegliche Joch durch Anziehen der Spindelmuttern 9 in der oberen eingenommenen Stellung festgehalten wird. Wahlweise kann ein solches Festhalten auch mit einer Keilvorrichtung oder Exzentervorrichtung oder auf irgendwelche andere an sich bekannte Art und Weise erfolgen, was hier nicht näher beschrieben werden muss.

Wenn das bewegliche Joch 6 somit in der oberen Stellung verriegelt ist, lässt man die Druckluft aus dem Luftbalg 10 heraus, der aus dem Zwischenraum 14 herausgenommen und in die nächste Presseneinheit eingesetzt und aufs Neue verwendet werden kann. Die somit zusammengepresste Presseneinheit ist jetzt zur Verwendung für Ultrafiltration, Hyperfiltration, umgekehrte Osmose etc. verwendbar, bis die Membranenfilterplatten zugesetzt sind bzw. deren Durchlässigkeit einen vorgegebenen Mindestwert unterschreitet und diese somit zu säubern sind. Für diesen Zweck wird der Luftbalg 10 erneut in den Zwischenraum 14 eingesetzt, mit Druckluft gefüllt, die Spindelmuttern 9 oder entsprechende Vorrichtung gelöst und das bewegliche Joch 6 abgesenkt. Anschliessend kann man von oben anfangend sämtliche Membranenfilterplatten bzw. Filterplattensätze nacheinander zur Säuberung aus der Presse herausnehmen.

Wurde indessen eine einzelne Filtermembrane beschädigt oder soll aus irgendwelchen anderen Gründen nur eine gewisse Membranenfilterplatte inspektiert, gereinigt oder auf andere Weise behandelt werden, wird die Blockiervorrichtung 15 mit dem Vorsprung 16 unter die nächste oberhalb der fraglichen Platte liegende Platte 17 eingeschwenkt, solange der Luftbalg 10 noch mit Druckluft gefüllt ist und die Blockiervorrichtung 15 an den Säulen 1 festgeklemmt. Anschliessend lässt man die Druckluft aus dem Luftbalg entweichen, so dass sämtliche unter der vom Vorsprung 16 festgehaltenen Platte liegenden Platten abgesenkt werden und dadurch die aktuelle Platte 17 zugänglich wird, ohne dass man darüberliegende Platten oder sogar das feste Joch entfernen muss.

Da die Presseneinheit mit nur zwei Säulen 1 ausgeführt ist, lässt sich das Herausnehmen leicht in Seitenrichtung vornehmen. Natürlich ist dies auch bei der Verwendung von drei Säulen möglich, wobei jedoch ein grösserer Abstand zwischen den Säulen und der Mitte der Presseneinheit vorliegen muss, wodurch die Vorrichtung mehr Platz benötigt.

Ein anderer, gleichzeitig bei der erfindungsgemässen Ausführung erreichter Vorteil ist, dass die Rohrverlegung zu den verschiedenen Einheiten bedeutend vereinfacht wird, was auch die Übersichtlichkeit verbessert und Säuberungsarbeit, eventuelles Sterilisieren etc. erleichtert. Es brauchen keine schweren Teile gehoben werden, da nun nur einzelne Membranenfilterplatten herauszunehmen sind, die jeweils für sich ziemlich leicht sind.

**Patentansprüche**

1. Filterpresse mit zwei oder mehreren vertikalen Presssäulen (1), auf denen ein oberes festes Joch (7) und ein unteres bewegliches Joch (6) mit dazwischenliegenden Pressplatten (17) angeordnet sind, wobei gegenüber der dem festen Joch (7) abgewandten Seite des beweglichen Joches (6) unter Bildung eines Zwischenraumes (14) ein mit den Säulen (1) fest verbundenes Widerlager (4) vorgesehen und im Zwischenraum (14) eine Hebevorrichtung (10) ansetzbar ist, dadurch gekennzeichnet, dass auf dem zwischen dem beweglichen (6) und festen Joch (7) liegenden, Filtermembranstapel mit den Pressplatten (17) aufnehmenden Teil der Säulen jeweils eine Blockiervorrichtung (15) durch Klemmwirkung o.dgl. festsetzbar ist, sowie dass jede Blockiervorrichtung (15) einen Absatz, Vorsprung o.dgl. (16) aufweist, der unter einer wahlfreien Pressplatte (17) plazierbar ist und diese an den Säulen (1) festhält, wenn das bewegliche untere Joch (6) durch die Hebevorrichtung (10) abgesenkt wird.

2. Vorrichtung nach Anspruch 1, dadurch gekennzeichnet, dass jede Säule (1) im Bereich des beweglichen Joches (6) unterhalb desselben mit einem Gewinde (2) versehen ist, sowie dass auf diesem Gewinde (2) mindestens eine Spindelmutter (9) sitzt.

3. Vorrichtung nach Anspruch 1 oder 2, dadurch gekennzeichnet, dass die Hebevorrichtung (10) aus dem Zwischenraum (14) herausnehmbar ist.

4. Vorrichtung nach Anspruch 1, 2 oder 3, dadurch gekennzeichnet, dass das bewegliche untere Joch (6) in eingenommener Stellung durch Anziehen bzw. Lösen mindestens einer Exzenter-, Keilriegel- oder Schraubvorrichtung (2, 9) festlegbar bzw. freigebbar ist.

**Claims**

1. A filter press having two or more vertical press columns (1) on which an upper fixed yoke (7) and a lower movable yoke (6) are mounted with pressure plates (17) extending therebetween, an abutment (4) fixedly connected to the columns (1) being provided opposite the side of the movable yoke (6), which faces away from the fixed yoke (7), while forming an interspace (14), and a lifting device (10) being mounted in the interspace (14), characterised in that a locking device (15) is fixed by clamping action or the like on each column portion extending between the movable yoke (6) and the fixed yoke (7) and accommodating filter membrane stacks with the pressure plates (17), and that each locking device (15) comprises a shoulder, projection (16) or the like which can be positioned below any desired pressure plate (17) and locks it against the columns (1) when the movable lower yoke (6) is lowered by means of the lifting device (10).

2. An arrangement as claimed in claim 1, characterised in that each column (1) in the area of the movable yoke (6) and below the same is provided with a thread (2), and that at least one spindle nut (9) is mounted on said thread (2).

3. An arrangement as claimed in claim 1 or 2, characterised in that the lifting device (10) can be removed from the interspace (14).

4. An arrangement as claimed in claim 1, 2 or 3, characterised in that the movable lower yoke (6) in the position as taken can be fastened and released by the tightening and loosening, respectively, of at least one eccentric, wedge or screw means (2, 9).

**Revendications**

1. Presse de filtration comprenant deux ou plusieurs colonnes verticales (1) sur lesquelles sont installées une culasse supérieure fixe (7) et une culasse inférieure mobile (6) entre lesquelles sont intercalées des plaques de compression (17), une contre-butée (4) reliée rigidement auxdites colonnes (1) étant prévue, en délimitant un espace intermédiaire (14), en regard de la face de la culasse mobile (6) qui est tournée à l'opposé de la culasse fixe (7), et un dispositif de levage (10) pouvant être incorporé dans ledit espace intermédiaire (14), caractérisée par le fait qu'un dispositif respectif de blocage (15) peut être assujetti par effet de coincement ou effet analogue sur la partie des colonnes qui est intercalée entre les culasses mobile (6) et fixe (7) et qui reçoit des empilements de membranes de filtration avec les plaques de compression (17); et par le fait que chaque dispositif de blocage (15) présente un décrochement, une saillie ou configuration analogue (16) qui peut être placée au-dessous d'une plaque de compression (17) sélectionnable à volonté, et qui maintient rigidement cette dernière sur les colonnes (1) lorsque la culasse inférieure mobile (6) est abaissée par le dispositif de levage (10).

2. Dispositif selon la revendication 1, caractérisé par le fait que chaque colonne (1) est pourvue d'un filetage (2) dans la région de la culasse mobile (6), au-dessous de celle-ci; et par le fait qu'au moins un écrou (9) est porté par ce filetage (2).

3. Dispositif selon la revendication 1 ou 2, caractérisé par le fait que le dispositif de levage (10) peut être extrait de l'espace intermédiaire (14).

4. Dispositif selon la revendication 1, 2 ou 3, caractérisé par le fait que la culasse inférieure mobile (6) peut être bloquée dans la position qu'elle a prise, ou dégagée de cette position, par engagement ou libération d'au moins un dispositif (2, 9) à excentrique, à coin de verrouillage ou à vis.

## Fig. 1

## Fig. 2

# Fig. 3